# EUROPEAN PATENT APPLICATION

(11) **EP 3 482 888 A1**
(43) Date of publication of application: **15.05.2019**
(21) Application number: 17824160.0
(22) Date of filing: 30.06.2017
(51) Int. Cl.: B25J 13/00, B65G 47/90

(54) **WORKPIECE DELIVERY DEVICE AND DRIVING METHOD OF SAME**

(30) Priority: 05.07.2016 JP 2016132961; 30.08.2016 JP 2016168502
(71) Applicant: Kawasaki Jukogyo Kabushiki Kaisha, Kobe-shi, Hyogo 650-8670 (JP)
(72) Inventor: TSUJIMORI, Toshiyuki, Kobe-shi Hyogo 650-8670 (JP); AZUMA, Kentaro, Kobe-shi Hyogo 650-8670 (JP); OKA, Mitsunobu, Tokyo 106-6135 (JP)
(74) Representative: Witte, Weller & Partner Patentanwälte mbB
(86) International application number: PCT/JP2017/024199
(87) International publication number: WO 2018/008556

(57) **Abstract**

A workpiece transferring device of this disclosure is a device to transfer a workpiece from a first placement surface to a second placement surface. The device includes a first arm (13A) including, at a tip thereof, a first fork (32) having a first branch part (34) extending sideward, and configured to move the first fork (32), and a second arm (13B) including, at a tip thereof, a second fork (22) having a second branch part (23) extending downward, and configured to move the second fork (22). When the first branch part (34) passes in between the workpiece and the first placement surface, the second branch part (23) is located ahead of the workpiece in a moving direction of the first branch part (34). When the first branch part (34) passes in between the workpiece and the second placement surface, the second branch part (23) is located ahead of the workpiece in the moving direction of the first branch part (34).

## Description

### TECHNICAL FIELD

The present disclosure relates to a workpiece transferring device which transfers a workpiece from a first placement surface to a second placement surface, and a method for operating the same.

### BACKGROUND ART

Known as a conventional workpiece transferring device is, for example, a device disclosed in Patent Document 1 which is for putting on a tray a piece of sliced meat in a meat slicer. In this device for putting a piece of meat on a tray, a piece of meat cut away by a hand knife is received by a conveyor belt and dropped from the conveyor belt to a tray.

### [Reference Document of Conventional Art]

### [Patent Document]

[Patent Document 1] JP2014-000667A

### DESCRIPTION OF THE DISCLOSURE

### [Problems to be Solved by the Disclosure]

In the device for putting a piece of meat on a tray disclosed in Patent Document 1, a piece of meat is dropped to a tray from a terminal end part of the conveyor belt. It is thus difficult for the device to, for example, prevent a workpiece prone to deformation from losing its shape during transfer of the workpiece to a tray.

The present disclosure is made in view of solving the above problems, and one purpose thereof is to provide a workpiece transferring device capable of appropriately transferring a workpiece from a first placement surface to a second placement surface, and a method for operating the same.

### [Summary of the Disclosure]

In order to achieve the purpose, a workpiece transferring device according to one aspect of the present disclosure is provided, which is a device to transfer a workpiece from a first placement surface to a second placement surface. The device includes a first arm including, at a tip thereof, a first fork having a first branch part extending sideward, and configured to move the first fork, and a second arm including, at a tip thereof, a second fork having a second branch part extending downward, and configured to move the second fork. When the first branch part passes in between the workpiece and the first placement surface, the second branch part is located ahead of the workpiece in a moving direction of the first branch part. When the first branch part passes in between the workpiece and the second placement surface, the second branch part is located ahead of the workpiece in the moving direction of the first branch part.

According to this structure, while being held back by the second branch part, the workpiece is shifted from the first placement surface to the first branch part, and then the workpiece is shifted from the first branch part to the second placement surface. Thus, the workpiece is appropriately transferred from the first placement surface to the second placement surface.

In the workpiece transferring device, the first fork may have a plurality of the first branch parts, and the second fork may have a plurality of the second branch parts.

In the workpiece transferring device, the first fork may have a plurality of the first branch parts, and the second fork may have a plurality of the second branch parts. When the first fork is located between the workpiece and the first placement surface, a tip of each of the first branch parts may be inserted into a gap between the adjacent second branch parts. According to this structure, the first branch parts do not come into contact with the second branch parts, and while being held back by the second branch parts, the workpiece is shifted from the first placement surface to the first branch parts.

In the workpiece transferring device, the first fork may have a plurality of the first branch parts, and the second fork may have a plurality of the second branch parts. When the first fork is located between the workpiece and the second placement surface, a tip of at least one of the plurality of second branch parts may be inserted into a gap between the adjacent first branch parts in a clearance between the workpiece and the plurality of first branch parts. According to this structure, the first branch parts do not come into contact with the second branch parts, and while being held back by the second branch parts, the workpiece is shifted from the first branch parts to the second placement surface.

In the workpiece transferring device, at least one of the first arm and the second arm may further include a suction part configured to cause the second placement surface to adhere thereto due to suction. According to this structure, the second placement surface is sucked by the suction part so that, for example, a tray having the second placement surface as its upper surface is fed.

The workpiece transferring device may further include a pair of sandwiching parts configured to sandwich a tray, the second placement surface being an upper surface of the tray. One of the pair of sandwiching parts may be provided to the first arm, and the other sandwiching part may be provided to the second arm. According to this structure, the tray with the workpiece on the second placement surface is sandwiched by the pair of sandwiching parts so that the tray is transferred stably without disorganizing the workpiece on the tray.

The workpiece transferring device may include a robot including the first arm and the second arm. According to this structure, by using a general-purpose robot with replaceable tips, the transferring of the workpiece is possible only by replacing these tips.

Further a workpiece transferring device according to another aspect of the present disclosure includes a first arm including a first holding part having a plate-like shape and provided with a plurality of protruded strips extending side by side on a first main surface of the first holding part, a second arm including a second holding part having a plate-like shape, and a controller. The controller causes the first arm and the second arm to move such that the first holding part and the second holding part face each other with a workpiece on a first placement surface therebetween, and the controller subsequently causes one of the first arm and the second arm to move so as to insert the first holding part in between the workpiece and the first placement surface and bring a main surface of the second holding part into contact with the workpiece.

According to this structure, while preventing the movement of the workpiece by the second holding part, the first holding part can shift between the workpiece and the first placement surface. Thus, the workpiece placed on the first placement surface is easily placed on the first main surface of the first holding part (the second placement surface).

A method according to another aspect of the present disclosure is a method for operating a workpiece transferring device, the workpiece transferring device including a first arm including a first holding part having a plate-like shape and provided with a plurality of protruded strips extending side by side on a first main surface of the first holding part, and a second arm including a second holding part having a plate-like shape. The method includes (A) causing the first arm and the second arm to move such that the first holding part and the second holding part face each other with a workpiece on the first placement surface therebetween, and (B) causing, subsequent to (A), one of the first arm and the second arm to move so as to insert the first holding part in between the workpiece and the first placement surface and bring a main surface of the second holding part into contact with the workpiece.

According to this structure, while preventing the movement of the workpiece by the main surface of the second holding part, the first holding part can shift between the workpiece and the first placement surface. Thus, the workpiece placed on the first placement surface is easily placed on the first main surface of the first holding part (the second placement surface).

### [Effects of the Disclosure]

The present disclosure has the structure described above and produces the effect of appropriately transferring a workpiece from the first placement surface to the second placement surface.

### BRIEF DESCRIPTION OF DRAWINGS

Fig. 1 is a plan view schematically illustrating an overall structure of an example of a robot to which a workpiece transferring device according to Embodiment 1 is applied.
Fig. 2 is a functional block diagram schematically illustrating a structure of a controller of the robot illustrated in Fig. 1.
Fig. 3 is a perspective view schematically illustrating a state in which a tray is fed in such a manner that a suction part causes a second placement surface to adhere thereto due to suction.
Fig. 4 is a perspective view schematically illustrating a state in which workpieces are taken from a first placement surface and put onto first branch parts.
Fig. 5 is a perspective view schematically illustrating a state in which the workpieces are transferred from the first branch parts to the second placement surface.

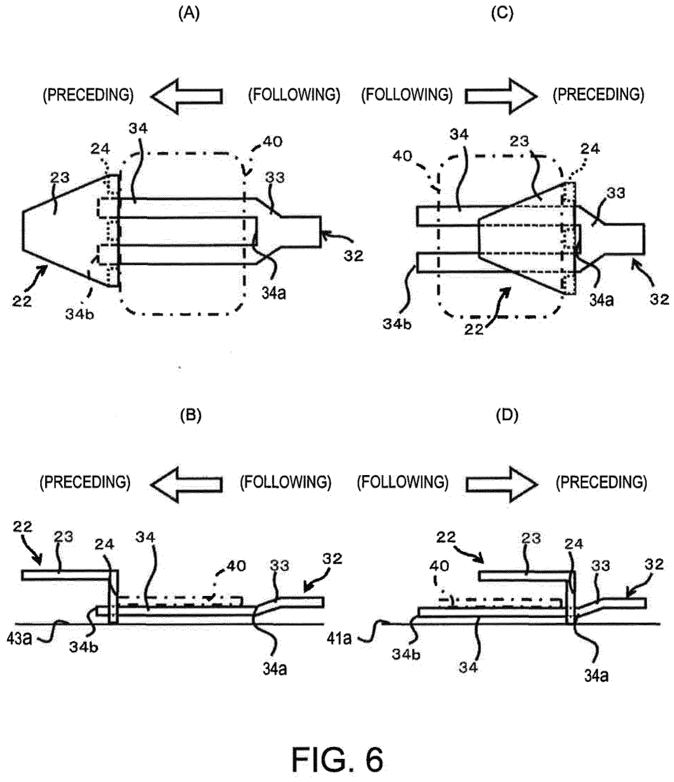

Fig. 6A is a view from the above illustrating a state in which a tip of each of first branch parts is inserted into a gap between second branch parts while a first fork is located between the workpiece and the first placement surface, Fig. 6B is a view from the side illustrating the state illustrated in Fig. 6A, Fig. 6C is a view from the above illustrating a state in which a tip of one of the second branch parts is inserted into a gap between the first branch parts in a clearance between the workpiece and a branch point of the first branch parts, and Fig. 6D is a view from the side illustrating the state illustrated in Fig. 6C.
Fig. 7 is a perspective view schematically illustrating a state in which a tray having the second placement surface with workpieces placed thereon is transferred to a second conveyor belt.
Fig. 8 is a top view illustrating a schematic structure of a first fork for a workpiece transferring device according to Embodiment 4.
Fig. 9 is a side view of the first fork illustrated in Fig. 8.
Fig. 10 is a flowchart of an example of operations performed by the workpiece transferring device according to Embodiment 4.
Fig. 11 is a schematic view illustrating a structure of a workpiece transferring device according to Embodiment 5.
Fig. 12 is a schematic view illustrating a structure of a robot being the workpiece transferring device illustrated in Fig. 11.
Fig. 13 is a top view illustrating a schematic structure of a first holding part of a first arm of the robot illustrated in Fig. 12.
Fig. 14 is a side view of the first holding part illustrated in Fig. 13.
Fig. 15 is a flowchart of an example of operations performed by the workpiece transferring device according to Embodiment 5.
Fig. 16 is a schematic view illustrating an example of operations performed by the workpiece transferring device according to Embodiment 5.
Fig. 17 is a schematic view illustrating an example of operations performed by the workpiece transferring device according to Embodiment 5.

### MODES FOR CARRYING OUT THE DISCLOSURE

Preferable embodiments will be described below with reference to the accompanying drawings. Note that, in the following, the same or corresponding elements are denoted by the same reference characters throughout the drawings to omit redundant description. The drawings illustrate each element schematically for easier understandings. Further, directions in which a pair of arms is outstretched are referred to as left-and-right directions, directions parallel to an axial center of a base shaft are referred to as vertical directions (up-and-down directions), and directions orthogonal to the left-and-right directions and the vertical directions are referred to as front-and-rear directions.

### (Embodiment 1)

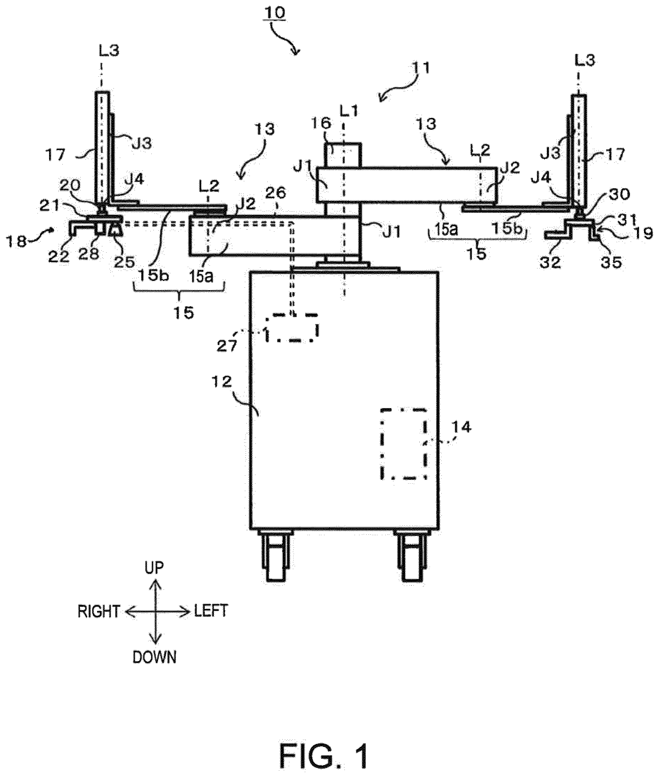

A workpiece transferring device 10 according to Embodiment 1 is a device capable of transferring a workpiece from a first placement surface to a second placement surface. The following describes the case in which the workpiece transferring device 10 according to the present disclosure is a robot 11 illustrated in Fig. 1. Note that the workpiece transferring device 10 is not limited to the device being the robot 11. As the robot 11, a horizontal articulated dual-arm robot is described below. Note that other robots such as a horizontal articulated robot and a vertical articulated robot may be employed.

As illustrated in Fig. 1, the robot 11 includes a carriage 12, a pair of robot arms (hereinafter, may simply be referred to as "arms") 13 supported by the carriage 12, and a controller 14 accommodated inside the carriage 12. Each arm 13 is a horizontal articulated robot arm, and includes an arm part 15, a wrist part 17, and a hand part 18 or 19. Note that the left arm 13 and the right arm 13 may have substantially the same structure except for the hand parts 18 and 19. Moreover, the left arm 13 and the right arm 13 may operate independently or operate in association with each other.

The arm part 15 includes a first link 15a and a second link 15b. The first link 15a is coupled to a base shaft 16 fixed to an upper surface of the carriage 12 through a rotary joint J1, and is revolvable about a rotation axis L1 passing through the axial center of the base shaft 16. The second link 15b is coupled to a tip of the first link 15a through a rotary joint J2, and is revolvable about a rotation axis L2 defined at the tip of the first link 15a.

The wrist part 17 is coupled to a tip of the second link 15b through a linear-motion joint J3, and is ascendable and descendible with respect to the second link 15b. Each of the right hand part 18 and the left hand part 19 is coupled to a lower end of the wrist part 17 through a rotary joint J4, and is revolvable about a rotation axis L3 defined at the lower end of the wrist part 17.

The right hand part 18 includes a right attaching part 20 connected to the wrist part 17, a right base 21 removably attached to the right attaching part 20, and a second fork 22 connected to the right base 21. The right attaching part 20, the right base 21, and the second fork 22 are provided to a tip of the right arm (second arm) 13. Details of the right hand part 18 will be described later.

The left hand part 19 includes a left attaching part 30 connected to the wrist part 17, a left base 31 removably attached to the left attaching part 30, and a first fork 32 connected to the left base 31. The left attaching part 30, the left base 31, and the first fork 32 are provided to a tip of the left arm (first arm) 13. Details of the left hand part 19 will be described later.

Each of the arms 13 having the structure described above has the joints J1 to J4. The arm 13 is provided, for example, with driving servo motors (not illustrated) corresponding to the joints J1 to J4 and with encoders (not illustrated) which detect rotational angles of the respective servo motors. Moreover, the rotation axes L1 of the first links 15a of the two arms 13 are located on the same straight line, and the first link 15a of one of the arms 13 and the first link 15a of the other one of the arms 13 are disposed with a height difference therebetween.

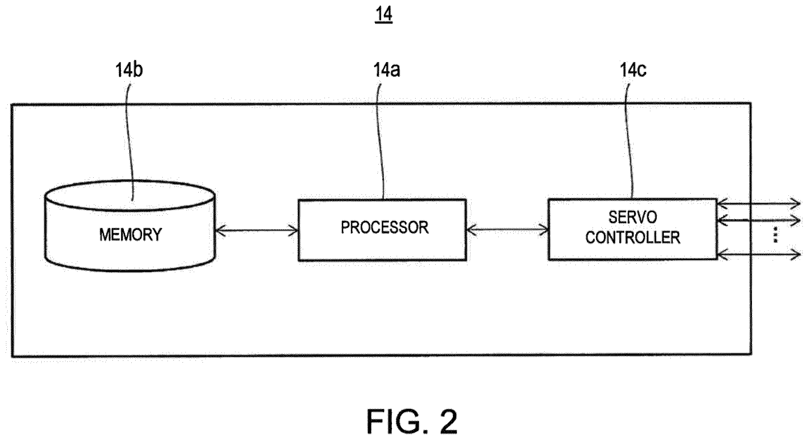

As illustrated in Fig. 2, the controller 14 includes a processor 14a such as a CPU, a memory 14b such as a ROM or a RAM, and a servo controller 14c. The controller 14 is, for example, a robot controller including a computer such as a microcontroller. The controller 14 may include a control device that performs a centralized control or may include a plurality of control devices which collaborate mutually to carry out a distributed control.

The memory 14b stores information, such as a basic program as a robot controller, various fixed data, etc. The processor 14a controls various operations of the robot 11 by reading and executing software, such as the basic program in the memory 14b. That is, the processor 14a generates control commands for the robot 11, and outputs them to the servo controller 14c. The servo controller 14c is configured to control driving of the servo motors corresponding to the joints J1-J4 of each arm 13 of the robot 11 based on the control commands generated by the processor 14a.

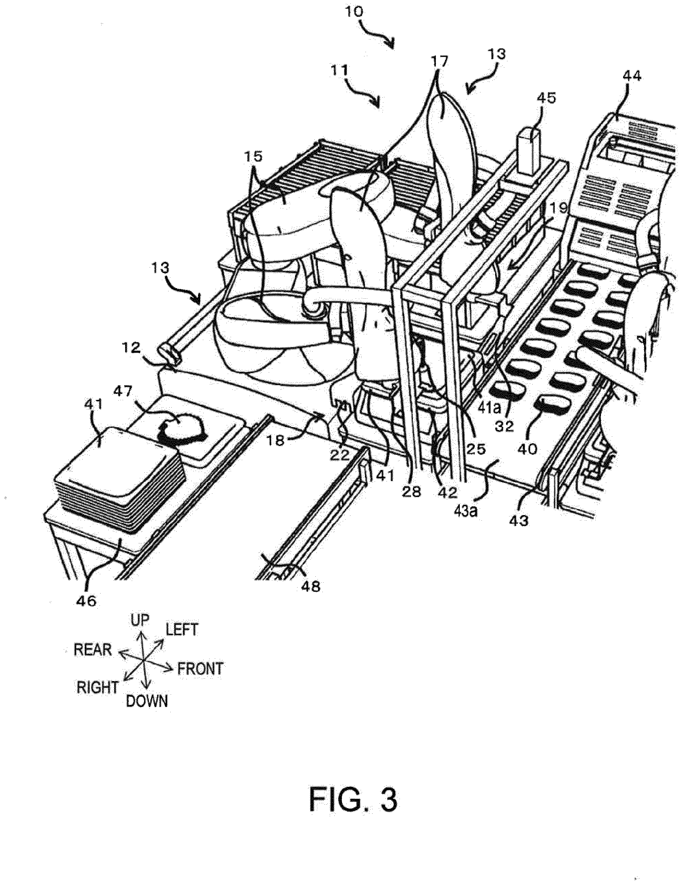

Next, the right hand part 18 and the left hand part 19 are described with reference to Figs. 3 to 5. The right hand part 18 includes the second fork 22 and the left hand part 19 includes the first fork 32. Alternatively, the right hand part 18 may include the first fork 32 and the left hand part 19 may include the second fork 22.

The right base 21 and the second fork 22 are removably attached to the right wrist part 17 via the right attaching part 20. The left base 31 and the first fork 32 are removably attached to the left wrist part 17 via the left attaching part 30. The attaching parts 20 and 30 each include a pair of rod-like members. The distance between the pair of rod-like members is adjustable. Thus, each of the bases 21 and 31 is sandwiched by the pair of rod-like members, and then the bases 21 and 31 and the forks 22 and 32 are attached to the respective wrist parts 17.

The first fork 32 includes a first handle part 33 and first branch parts 34, which have plate-like shapes. A proximal end of the first handle part 33 is connected to the left base 31, and the first handle part 33 extends sideward from the proximal end in a straight line and inclines downward.

The first handle part 33 branches into the plurality of branch parts 34 (two in this embodiment). Proximal ends of the first branch parts 34 are connected to the first handle part 33 and the first branch parts 34 extend sideward in a straight line. The first branch parts 34 are parallel with each other with a gap therebetween. The gap between the first branch parts 34 in the directions in which the first branch parts 34 are aligned is greater than the width of each of second branch parts 24 in the directions in which the second branch parts 24 are aligned. The term "sideward" herein means "in directions other than the vertical directions." These directions are, for example, the horizontal directions such as the front-and-rear directions and the left-and-right directions. The horizontal directions encompass not only horizontal directions in a strict sense but also oblique directions and other directions including horizontal directions.

The second fork 22 includes a second handle part 23 and the second branch parts 24, which have plate-like shapes. A proximal end of the second handle part 23 is connected to the right base 21, and the second handle part 23 extends sideward from the proximal end in a straight line.

The second handle part 23 branches into the plurality of second branch parts 24 (three in this embodiment). Proximal ends of the second branch parts 24 are connected to the second handle part 23, and the second branch parts 24 extend linearly in a direction different from the direction in which the first branch parts 34 extend, in this embodiment, the direction refers to directions orthogonal to the directions in which the first branch parts 34 extend (downward). The second branch parts 24 are parallel with each other with a gap therebetween. The gap between the second branch parts 24 in the directions in which the second branch parts 24 are aligned is greater than the width of each of the first branch parts 34 in the directions in which the first branch parts 34 are aligned.

With reference to Figs. 3 to 5, the following describes the procedure by which the robot 11 having the structure described above transfers workpieces 40 from a first placement surface 43a to a second placement surface 41a. The procedure is governed by the controller 14. Although the workpieces 40 are herein thin slices of meat, the workpieces 40 are not limited thereto. Although a plurality of thin slices of meat are transferred from the first placement surface 43a to the second placement surface 41a in the following description, the number and the shape of the workpieces 40 are not limited to the number and the shape described herein.

As illustrated in Fig. 3, a first workbench 42 and a first conveyor belt 43 are placed in front of the robot 11. The first conveyor belt 43 operates intermittently so as to receive, on an upper surface (conveying surface) thereof, the plurality of workpieces 40 obtained after cutting performed by, for example, a slicer 44 with spacing between batches of the workpieces 40 and transfer them to the front of the robot 11. The upper surface of the first conveyor belt 43 is the first placement surface 43a. Note that the first placement surface 43a on which the workpieces 40 are placed is not limited to the upper surface of the first conveyor belt 43.

The first workbench 42 is a table where the workpieces 40 are to be put onto an upper surface of a tray 41. The upper surface of the tray 41 is the second placement surface 41a. Note that the second placement surface 41a onto which the workpieces 40 are to be put is not limited to the upper surface of the tray 41.

A camera 45 is disposed above the first conveyor belt 43. The camera 45 captures images of the workpieces 40 being transferred by the first conveyor belt 43 and outputs the captured images to the controller 14. The controller 14 analyzes the images to determine, for example, the orientation and shapes of the workpieces 40.

First, the workpieces 40 placed on the conveying surface (first placement surface) 43a of the first conveyor belt 43 are transferred from the slicer 44 and approach the robot 11, and then the camera 45 captures an image of the workpieces 40 on the first conveyor belt 43. The controller 14 acquires the image of the workpieces 40 from the camera 45 and determine the orientation and shape of the workpieces 40.

Then, the workpieces 40 are taken from the first placement surface 43a and put onto the first branch parts 34 based on the determination results. When the first branch parts 34 pass in between the workpieces 40 and the first placement surface 43a, the second branch parts 24 are located ahead of the workpieces 40 in the direction of the movement of the first branch parts 34.

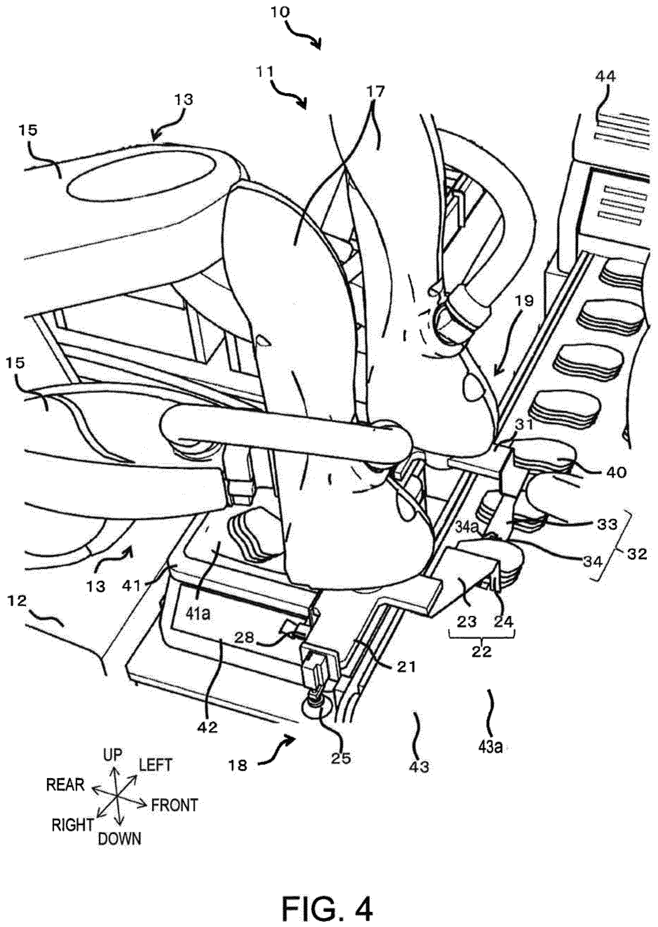

Specifically, as illustrated in Fig. 4, the second fork 22 is oriented such that the second branch parts 24 are aligned in the directions orthogonal to the direction in which the first conveyor belt 43 runs. Then, the second fork 22 above the first conveyor belt 43 is moved downward by the second arm 13. Based on the determination about the orientation and shape of the workpieces 40, the second branch parts 24 are located downstream of the workpieces 40 on the first conveyor belt 43 in the direction in which the first conveyor belt 43 runs. Thus, in the direction in which the first conveyor belt 43 runs, the second branch parts 24 are located in a downstream position and the workpieces 40 are placed in an upstream position. The second branch parts 24 and the workpieces 40 may be positioned with a clearance therebetween. Thus, tips of the second branch parts 24 are more unfailingly prevented from stamping on the workpieces 40.

On the first conveyor belt 43, the first fork 32 is oriented such that the direction in which the first branch parts 34 extend coincides with the conveying direction, and then the first fork 32 is moved by the first arm 13 from the upstream of the workpieces 40 toward the conveying direction. Thus, the first fork 32 moves toward the second branch parts 24 in the direction in which the first branch parts 34 extend, and the first branch parts 34 pass in-between the first conveyor belt 43 and the workpieces 40. The second branch parts 24 are now located ahead of the workpieces 40 in the direction of the movement of the first branch parts 34. Even if the workpieces 40 are nearly moved ahead according to the movement of the first branch parts 34, the workpieces 40 are held back by the second branch parts 24. The workpieces 40 in a flat (not lost its shape) state are appropriately placed on the first branch parts 34.

As illustrated in Figs. 6A and 6B, tips 34b of the first branch parts 34 are inserted into the gaps between the second branch parts 24. Consequently, without bumping into the second branch parts 24, the first branch parts 34 hold the workpieces 40 extending between the preceding ends and the following ends in the direction of the movement of the workpieces 40 indicated by the arrow. In particular, even in the case where the second branch parts 24 and the workpieces 40 are positioned with a clearance therebetween, the first branch parts 34 unfailingly hold the workpieces 40 due to the first branch parts 34 and second branch parts 24 crossing each other.

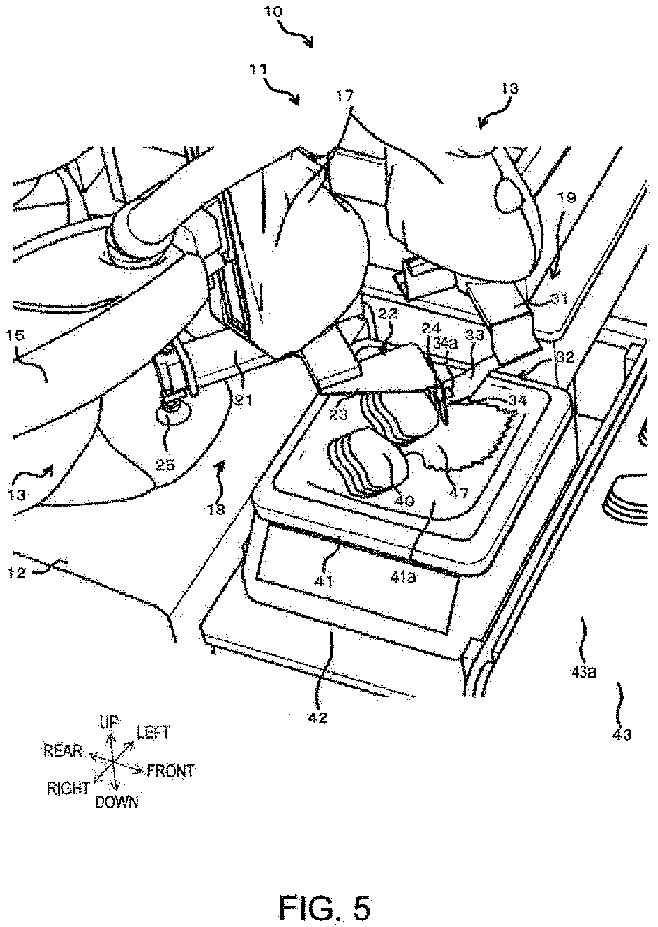

The workpieces 40 is now located on the first branch parts 34. Subsequently, as illustrated in Fig. 5, the workpieces 40 are transferred from the first branch parts 34 to the second placement surface 41a. When the first branch parts 34 pass in between the workpieces 40 and the second placement surface 41a, the second branch parts 24 are located ahead of the workpieces 40 in the direction of the movement of the first branch parts 34.

Specifically, the second fork 22 is lifted upward, and then the first fork 32 is lifted upward and shifted to the second placement surface 41a. On the first fork 32, there is a clearance between the workpieces 40 and a branch point 34a of the first branch parts 34. As illustrated in Figs. 6C and 6D, while the first fork 32 is located between the workpieces 40 and the second placement surface 41a, the tip of one of the second branch parts 24 is inserted into the gap between the first branch parts 34 in the clearance between the workpieces 40 and the branch point 34a of the first branch parts 34.

Then, on the second placement surface 41a, the first fork 32 is moved by the first arm 13 in the direction in which the first branch parts 34 extend toward second branch parts 24. The first fork 32 is moved, with the first branch parts 34 passing in between the second placement surface 41a and the workpieces 40. The second branch parts 24 are now located ahead of the workpieces 40 in the direction of the movement of the first branch parts 34. Even if the workpieces 40 are nearly moved ahead according to the movement of the first branch parts 34, the workpieces 40 are held back by the second branch parts 24. Thus, the workpieces 40 in a flat state are appropriately shifted to the second placement surface 41a, and the workpieces 40 are transferred to the second placement surface 41a.

According to this embodiment, when the first branch parts 34 pass in between the workpieces 40 and the first placement surface 43a, the second branch parts 24 are located ahead of the workpieces 40 in the direction of the movement of the first branch parts 34. Similarly, when the first branch parts 34 pass through between the workpieces 40 and the second placement surface 41a, the second branch parts 24 are located ahead of the workpieces 40 in the direction of the movement of the first branch parts 34. While being held back by the second branch parts 24, the workpieces 40 are shifted from the first placement surface 43a to the first branch parts 34, and then the workpieces 40 are shifted from the first branch parts 34 to the second placement surface 41a. Thus, the workpieces 40 prone to deformation, such as pieces of soft and sticky meat, are appropriately transferred to the second placement surface 41a without losing their shapes.

The workpiece transferring device 10 is the robot 11 which moves the arms 13 in the horizontal directions. Thus, the first fork 32 and the second fork 22 are moved in the horizontal directions, so that the workpieces 40 may be rearranged on the second placement surface 41a. This offers a high degree of flexibility in arrangement of the workpieces 40 on the second placement surface 41a and enables, for example, a good food presentation, which provides added value.

Furthermore, while the first fork 32 is located between the workpieces 40 and the first placement surface 43a, each of the tips 34b of the first branch parts 34 is inserted into the gap between the second branch parts 24 adjacent to each other. Thus, without bumping into second branch parts 24, the first branch parts 34 hold the workpieces 40 while the second branch parts 24 hold back the workpieces 40. On the first placement surface 43a, the second branch parts 24 are located ahead of the workpieces 40 with a clearance between the second branch parts 24 and the workpieces 40. Thus, the second branch parts 24 are prevented from stamping on the workpieces 40.

While the first fork 32 is located between the workpieces 40 and the second placement surface 41a, the tip of one of the second branch parts 24 is inserted into the gap between the first branch parts 34 adjacent to each other in the clearance between the workpieces 40 and the branch point 34a of the first branch parts 34. Thus, without coming into contact with the first fork 32, the second branch parts 24 hold back the workpieces 40, and the workpieces 40 are shifted from the first branch parts 34 to the second placement surface 41a.

The workpiece transferring device 10 is the robot 11 including the first arm 13 and the second arm 13. In the workpiece transferring device 10, the first fork 32 is removably attached to the wrist part 17 of the left arm 13 via the left attaching part 30, and the second fork 22 is removably attached to the wrist part 17 of the right arm 13 via the right attaching part 20. The general-purpose robot 11 including replaceable tips, for example, the first fork 32 and the second fork 22 necessitates only replacement of these tips for transferring the workpieces 40.

### (Embodiment 2)

As illustrated in Fig. 1, the workpiece transferring device 10 according to Embodiment 2 is further provided with a suction part 25 to which the second placement surface 41a (see Fig. 3) adheres due to suction. Thus, the right hand part 18 includes the suction part 25 in addition to the right attaching part 20, the right base 21, and the second fork 22.

The suction part 25 is provided to the tip of the right arm (second arm) 13. The suction part 25 is connected to the vacuum generating device 27 via a piping 26. The vacuum generating device 27 is a device which generates a negative pressure at the suction part 25, such as a vacuum pump or CONVUM®, and is provided to the carriage 12 or the arm 13. The piping 26 is provided with, for example, an on-off valve (not illustrated). Opening and closing the piping 26 with the on-off valve allow the suction and the stopping of the suction by the suction part 25, respectively. The operation of the vacuum generating device 27 and the opening and closing of the on-off valves are controlled by the controller 14. Thus, the vacuum generating device 27 performs the suction via the suction part 25 such that the second placement surface 41a (see Fig. 3) adheres thereto.

A tip of the suction part 25 is a suction pad formed from an elastic material such as rubber, and has a shape of a cap which opens downward. The suction part 25 is attached to the wrist part 17 via the right base 21. Thus, the suction part 25 revolves about the rotation axis L3 of the wrist part 17.

The suction part 25 may be provided not to the right base 21 but to the left base 31, or may be provided to both the right base 21 and the left base 31. Thus, the suction part 25 is provided to at least one of the first arm 13 and the second arm 13.

As illustrated in Fig. 3, a second workbench 46 is placed on the right side of the robot 11, and the trays 41 which are yet to be used and grass garnish sheets 47 are placed on the second workbench 46. Before the workpieces 40 are transferred to the second placement surface 41a of the tray 41, the suction part 25 causes the second placement surface 41a to adhere thereto due to suction, and the tray 41 is shifted from the second workbench 46 to the first workbench 42. Then, the second placement surface 41a is released from the suction through the suction part 25, and the tray 41 is placed on the first workbench 42.

Subsequently, the suction part 25 causes the grass garnish sheet 47 to adhere thereto due to suction, so that the grass garnish sheet 47 is shifted from the second workbench 46 to above the second placement surface 41a on the first workbench 42. Then, the suction is stopped, and the grass garnish sheet 47 is placed on the second placement surface 41a. Subsequently, the first fork 32 and the second fork 22 are used to transfer the workpieces 40 from the first placement surface 43a to the second placement surface 41a.

According to the structure described above, the suction part 25 is provided to the right hand part 18. Thus, the workpiece transferring device 10 does not need to be equipped with a device designed specifically for providing the second placement surface 41a, thus being compact in size. Furthermore, the grass garnish sheet 47 adheres to the suction part 25 due to suction, and is placed onto the second placement surface 41a. For example, a variety of food presentations on the second placement surface 41a are possible accordingly.

### (Embodiment 3)

As illustrated in Fig. 1, the workpiece transferring device 10 according to Embodiment 3 further includes a pair of sandwiching parts 28 and 35 which sandwich the tray 41. The left arm 13 is provided with one of the pair of sandwiching parts (first sandwiching part 35) whereas the right arm 13 is provided with the other one of the sandwiching parts (second sandwiching part 28). Thus, the left hand part 19 includes the first sandwiching part 35 in addition to the left attaching part 30, the left base 31, and the first fork 32. The right hand part 18 includes the second sandwiching part 28 in addition to the right attaching part 20, the right base 21, and the second fork 22.

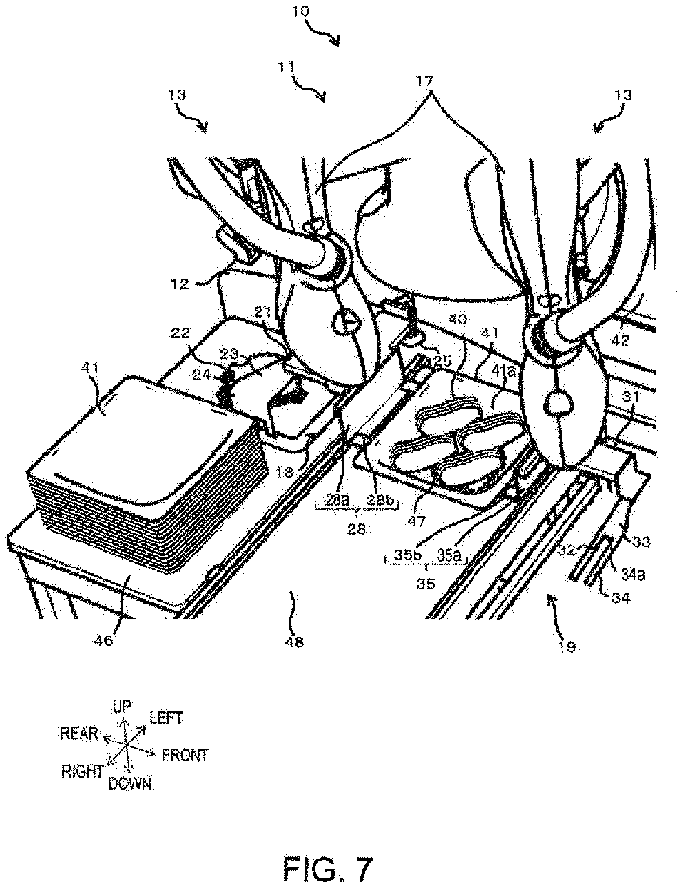

As illustrated in Fig. 7, the first sandwiching part 35 is L-shaped and includes a first side surface part 35a and a first bottom surface part 35b, which have a flat plate-like shape. The second sandwiching part 28 is L-shaped and includes a second side surface part 28a and the second bottom surface part 28b, which have a flat plate-like shape. Proximal ends of the side surface parts 35a and 28a are connected to the bases 21 and 31, respectively, and the side surface parts 35a and 28a extend downward from their respective proximal ends. Proximal ends of the bottom surface parts 35b and 28b are connected to the side surface parts 35a and 28a, respectively, and the bottom surface parts 35b and 28b extend sideward from their proximal ends.

On the first workbench 42, the workpieces 40 are put onto the upper surface (the second placement surface 41a) of the tray 41, and subsequently, the tray 41 is sandwiched by the pair of sandwiching parts 28 and 35. For example, the first sandwiching part 35 and the second sandwiching part 28 are located on the sides of the tray 41 such that the first side surface part 35a and the second side surface part 28a are parallel with each other and the first bottom surface part 35b and the second bottom surface part 28b are at the same height.

Then, the bottom surface parts 35b and 28b are inserted in between the first workbench 42 and the second placement surface 41a, so that the tray 41 is put onto the bottom surface parts 35b and 28b. Subsequently, the distance between the first side surface part 35a and the second side surface part 28a is reduced, so that the first side surface part 35a and the second side surface part 28a sandwich and grip the tray 41. The tray 41 sandwiched by the pair of sandwiching parts 35 and 28 is shifted from the first workbench 42 to a second conveyor belt 48 for conveyance. The distance between the first side surface part 35a and the second side surface part 28a is then increased such that the tray 41 is carried out by the second conveyor belt 48.

According to the structure described above, the second placement surface 41a is the upper surface of the tray 41, and the pair of sandwiching parts 28 and 35 which sandwich the tray 41 is further provided. The tray 41 with the workpieces 40 on the second placement surface 41a is sandwiched by the pair of sandwiching parts 28 and 35. Thus, the tray 41 is transferred without disorganizing the workpieces 40 on the second placement surface 41a.

In the workpiece transferring device 10 according to Embodiment 2 as well, the left hand part 19 may include the first sandwiching part 35 and the right hand part 18 may include the second sandwiching part 28. In this case, the left hand part 19 includes the left attaching part 30, the left base 31, the first fork 32, and the first sandwiching part 35. The right hand part 18 includes the right attaching part 20, the right base 21, the second fork 22, the suction part 25, and the second sandwiching part 28.

Although the right hand part 18 is coupled to the wrist part 17 via the right attaching part 20 in the embodiment described above, the right hand part 18 may be directly coupled to the wrist part 17. Although the left hand part 19 is coupled to the wrist part 17 via the left attaching part 30, the left hand part 19 may be directly coupled to the wrist part 17.

Although the first sandwiching part 35 is L-shaped in the embodiment described above, the first sandwiching part 35 may have any shape as long as the first sandwiching part 35 extends downward from its proximal end. In this case, the first sandwiching part 35 may have a flat plate-like shape, with its proximal end connected to a rotating mechanism. Owing to the rotating mechanism, the first sandwiching part 35 may be horizontally oriented or oriented in downward-facing direction.

### (Embodiment 4)

A workpiece transferring device according to Embodiment 4 is any of the workpiece transferring devices according to Embodiments 1 to 3 in which the first branch parts are provided with protruded strips extending on upper surfaces thereof in the direction in which the first branch parts extend.

In the workpiece transferring device according to Embodiment 4, each protruded strip may be formed such that a tip end portion closer to a tip there has a smaller height.

The workpiece transferring device according to Embodiment 4 may further include a controller which causes the first arm and the second arm to move such that the first fork and the second fork face each other with the workpieces on the first placement surface therebetween, and subsequently causes the first arm move so as to insert the first branch parts of the first fork in between the workpieces and the first placement surfaces. In addition, the first arm or the second arm is moved so as to bring the first fork and the second fork close to each other.

In the workpiece transferring device according to Embodiment 4, the controller may also be configured to cause the first arm and the second arm to move in the following manner. When the workpieces on the upper surfaces of the first branch parts of the first fork are put onto the second placement surface, the second arm is moved such that the tip end portions of the second branch parts of the second fork are located above the proximal end portions of the first branch parts. Subsequently, the first arm or the second arm is moved such that the first fork and the second fork become separated from each other in directions in which the first branch parts extend.

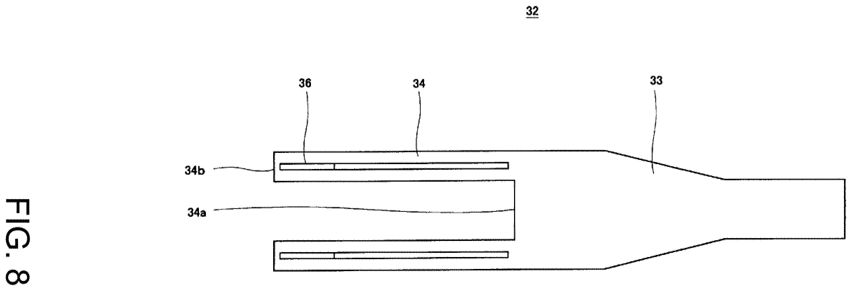

With reference to Figs. 8 to 10, the following describes an example of the workpiece transferring device according to Embodiment 4.

### [Structure of Workpiece Transferring Device]

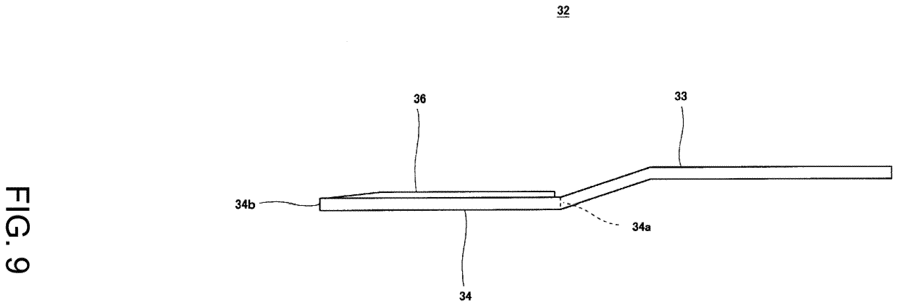

Fig. 8 is a top view illustrating a schematic structure of a first fork for a workpiece transferring device according to Embodiment 4. Fig. 9 is a side view of the first fork illustrated in Fig. 8.

The basic structure of the workpiece transferring device according to Embodiment 4 is identical to that of the workpiece transferring device according to Embodiment 1 except that, as illustrated in Figs. 8 and 9, the upper surfaces of the first branch parts 34 have protruded strips 36. The protruded strips 36 extend in the direction in which the first branch parts 34 extend. Proximal end portions of the protruded strips 36 are close to the branch point 34a of the first branch parts 34 whereas tip end portions of the protruded strips 36 are close to the tips 34b of the first branch parts 34. Note that the protruded strips 36 may extend to reach the first handle part 33 of the first fork 32.

Each protruded strip 36 tapers such that a tip end portion closer to a tip of the protruded strip 36 has a smaller height. Thus, the tip end portion of the first fork 32 is easily inserted in between the workpieces 40 and the first placement surface 43a.

The upper surface of each first branch part 34 is provided with one protruded strip 36 in this embodiment. Alternatively, the upper surface of each first branch part 34 may be provided with two or more protruded strips 36 aligned side by side.

### [Operations of Workpiece Transferring Device and Functions and Effects of the Same]

With reference to Figs. 8 to 10, the following describes the operations of the workpiece transferring device 10 according to Embodiment 4 and the functions and effects of the same.

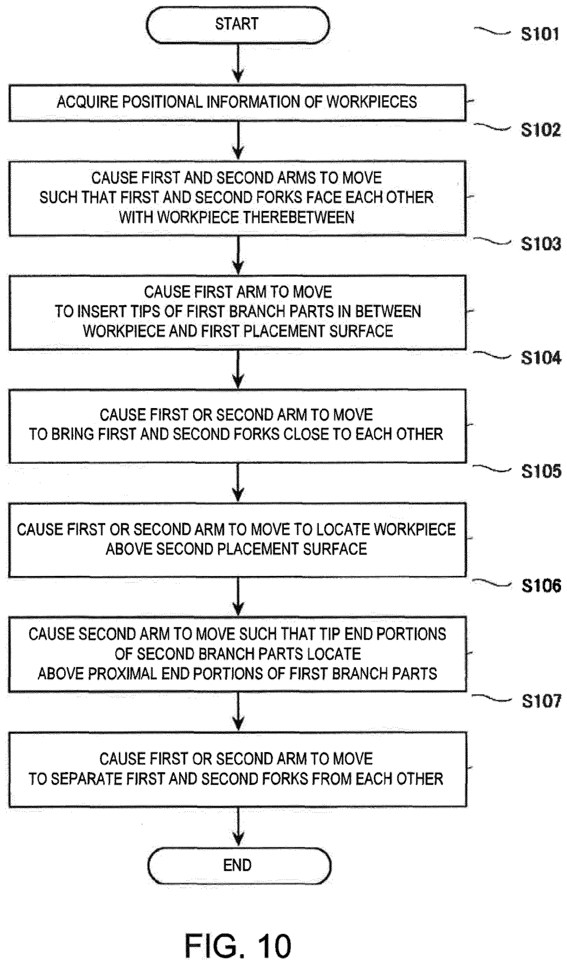

Fig. 10 is a flowchart of an example of operations performed by the workpiece transferring device according to Embodiment 4. The following describes the operation which is performed to transfer the workpieces 40 placed on the upper surface (the first placement surface 43a) of the first conveyor belt 43 and to put the workpieces 40 onto the upper surface (the second placement surface 41a) of the tray 41 (see Figs. 3 to 5). The processor 14a included in the controller 14 reads the programs stored in the memory 14b, so that the following operations are performed.

As illustrated in Fig. 10, the controller 14 acquires information on the images captured by the camera 45, and acquires positional information of the workpieces 40 on the first placement surface 43a of the first conveyor belt 43 from the acquired image information (Step S101).

Then, based on the positional information of the workpieces 40 which has been acquired in Step S101, the controller 14 causes the first arm 13 and the second arm 13 to move such that the first fork 32 and the second fork 22 face each other with the workpieces 40 therebetween (Step S102). Specifically, the controller 14 causes the first arm 13 to move such that the first fork 32 is located upstream of the workpieces 40 in the direction in which the first conveyor belt 43 runs. The controller 14 also causes the second arm 13 to move so as to position the second fork 22 downstream of the workpieces 40 in the direction in which the first conveyor belt 43 runs.

The controller 14 may also cause the first arm 13 and the second arm 13 to move such that the direction in which the first branch parts 34 of the first fork 32 extend coincides with the direction of the normal to the main surfaces of the second branch parts 24 of the second fork 22.

Although the first fork 32 and the second fork 22 are arranged in the direction in which the first conveyor belt 43 runs in Embodiment 4, the arrangement of these forks is not limited thereto. It is only required that the first fork 32 and the second fork 22 face each other with the workpieces 40 therebetween. For example, the first fork 32 and the second fork 22 may be arranged in the directions perpendicular to the direction in which the first conveyor belt 43 runs (the front-and-rear directions of the robot 11).

Next, the controller 14 causes the first arm 13 to move so as to insert the tips 34b of the first branch parts 34 in between the workpieces 40 and the first placement surface 43a (Step S103). Subsequently, the controller 14 causes the first arm 13 or the second arm 13 to move so as to bring the first fork 32 and the second fork 22 close to each other (Step S104, see Fig. 4). As illustrated in Figs. 6A and 6B, the controller 14 may cause the first arm 13 or the second arm 13 such that the tip of the first branch part 34 is located in the gap between the second branch parts 24.

Thus, the first branch parts 34 pass in between the workpieces 40 and the first placement surface 43a in the direction in which the first conveyor belt 43 runs, so that the workpieces 40 are put onto the upper surfaces of the first branch parts 34. In Embodiment 4, the upper surfaces of the first branch parts 34 are provided with the protruded strips 36 formed thereon. Thus, when the first branch parts 34 pass in between the workpieces 40 and the first placement surface 43a, the area of the first branch parts 34 in contact with the workpieces 40 is reduced, and the first branch parts 34 are subjected to a smaller frictional resistance accordingly. The workpiece transferring device puts the workpieces 40 onto the first branch parts 34 more smoothly than the workpiece transferring device 10 in Embodiment 1.

When the workpieces 40 are nearly shifted in the direction in which the first conveyor belt 43 runs according to the movement of the first branch parts 34, the workpieces 40 abut against the second fork 22, thus being prevented from shifting. Consequently, the workpieces 40 in a flat state are held by the first branch parts 34.

Then, the controller 14 causes the first arm 13 or the second arm 13 to move such that the workpieces 40 are located above the second placement surface 41a of the tray 41 (Step S105). Subsequently, the controller 14 causes the second arm 13 to move such that the tip end portions of the second branch parts 24 of the second fork 22 are located above the proximal end portions of the first branch parts 34 (the branch point 34a) (Step S106).

The controller 14 may cause the second arm 13 to move such that the direction in which the first branch parts 34 of the first fork 32 extend coincides with the direction of the normal to the main surfaces of the second branch parts 24 of the second fork 22. In other words, the controller 14 may cause the first arm 13 or the second arm 13 to move such that the main surfaces of the second branch parts 24 viewed in horizontal directions face the workpieces 40.

As illustrated in Figs. 6C and 6D, the controller 14 may cause the first arm 13 or the second arm 13 to move such that each first branch part 34 is located in the gap between the second branch parts 24.

Then, the controller 14 causes the first arm 13 or the second arm 13 to move so as to separate the first fork 32 and the second fork 22 from each other in the directions in which the first branch parts 34 extend (Step S107, see Fig. 5), and the controller 14 ends this program.

When the first fork 32 is separated from the second fork 22, the workpieces 40 on the first branch parts 34 of the first fork 32 are nearly shifted according to the movement of the first fork 32, the workpieces 40 abut against the second fork 22, thus being prevented from shifting. Thus, the workpieces 40 are no longer supported by the first branch parts 34 and fall to be placed on the second placement surface 41a of the tray 41.

As described above, the upper surfaces of the first branch parts 34 are provided with the projections 36 formed thereon in Embodiment 4. Thus, when the first branch parts 34 is moved, the area of the first branch parts 34 in contact with the workpieces 40 is reduced, and the first branch parts 34 are subjected to a smaller frictional resistance accordingly. The first branch parts 34 are shifted more smoothly and the workpieces 40 in a flat state are put onto the second placement surface 41a more easily, in this workpiece transferring device than in the workpiece transferring device 10 according to Embodiment 1.

Note that the controller 14 may cause the first arm 13 and the second arm 13 to return to preset positions (initial positions) before ending this program. Once all of the workpieces 40 on the first placement surface 43a of the first conveyor belt 43 are transferred to the second placement surfaces 41a of the trays 41 through repetitive executions of this program, the controller 14 may output information (e.g., image, sound, light) indicating that the transfer has been completed.

The workpiece transferring device 10 having the above-described structure according to Embodiment 4 has functions and effects similar to those of the workpiece transferring device 10 according to Embodiment 1.

In the workpiece transferring device 10 according to Embodiment 4, the upper surfaces of the first branch parts 34 have the projections 36. Thus, when the workpieces 40 are put onto the first branch parts 34, the area of the first branch parts 34 in contact with the workpieces 40 is reduced, and the first branch parts 34 are subjected to a smaller frictional resistance accordingly. This workpiece transferring device puts the workpieces 40 onto the first branch parts 34 more smoothly than the workpiece transferring device 10 in Embodiment 1. When the workpieces 40 on the first branch parts 34 are put onto the second placement surface 41a, the workpieces 40 are more easily kept in a flat state.

Obviously, the workpiece transferring device 10 according to Embodiment 4 may include the suction part 25 as the workpiece transferring device 10 according to Embodiment 2 does, or may include, as the workpiece transferring device 10 according to Embodiment 3 does, the pair of sandwiching parts 28 and 35 which sandwich the tray 41.

### (Embodiment 5)

The workpiece transferring device according to Embodiment 5 includes a first arm including a first holding part having a plate-like shape and provided with a plurality of protruded strips extending side by side on a first main surface of the first holding part; and a controller. The controller causes the first arm to move so as to insert the first holding part in between a workpiece and a first placement surface.

The workpiece transferring device according to Embodiment 5 further includes a second arm including a second holding part. The controller may cause the first arm and the second arm to move such that the first holding part and the second holding part face each other with a workpiece on the first placement surface therebetween, and to subsequently cause the first arm or the second arm to move so as to insert the first holding part in between the workpiece and the first placement surface and bring the second holding part into contact with the workpiece.

In the workpiece transferring device according to Embodiment 5, the tip end portion closer to a tip of each protruded strip may have a smaller height.

Furthermore, in the workpiece transferring device according to Embodiment 5, the controller may cause the second arm to move such that the second holding part faces the workpiece on the first main surface of the first holding part and a tip end portion of the second holding part is located above a proximal end portion of the first main surface, and may subsequently cause the first arm or the second arm so as to separate the first holding part and the second holding part in directions in which the protruded strips extend.

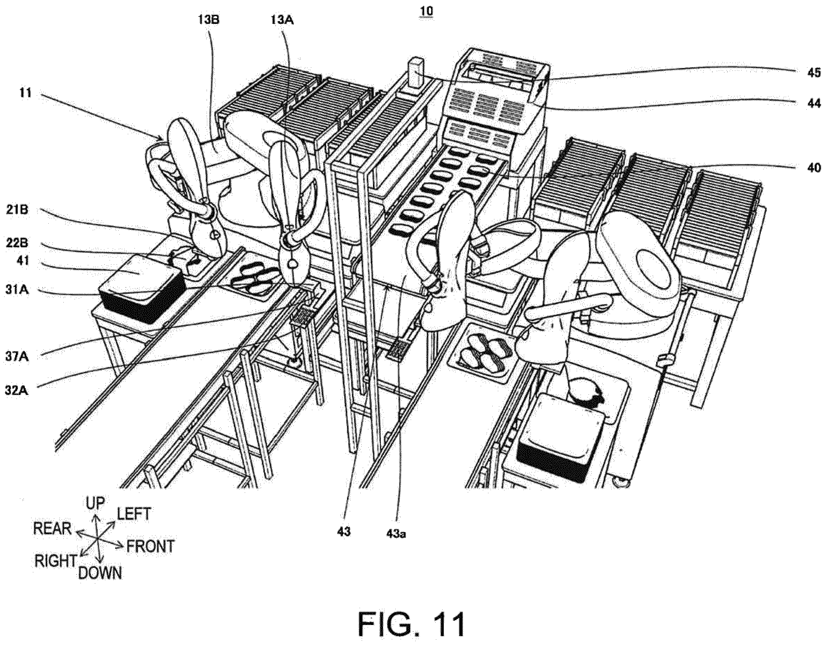

With reference to Figs. 11 to 17, the following describes an example of the workpiece transferring device according to Embodiment 5.

### [Structure of Workpiece Transferring Device]

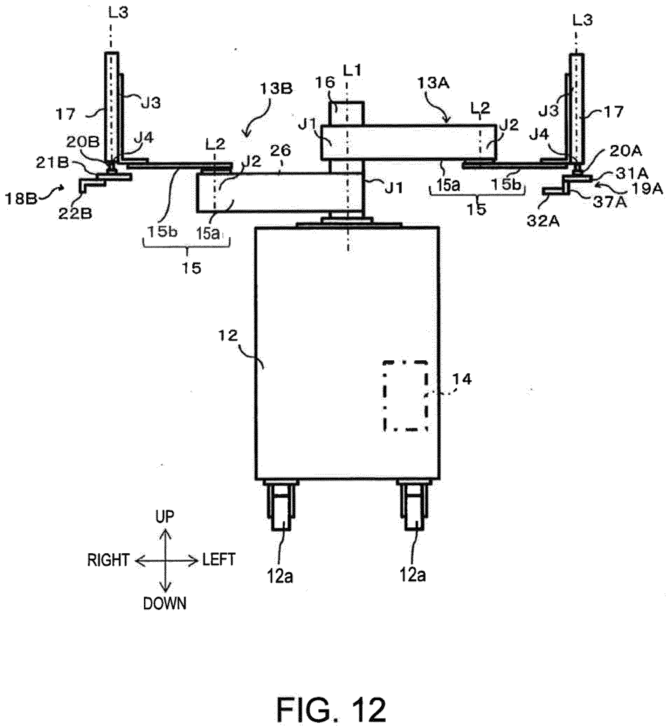

Fig. 11 is a schematic view illustrating a structure of a workpiece transferring device according to Embodiment 5. Fig. 12 is a schematic view illustrating a structure of a robot being the workpiece transferring device illustrated in Fig. 11. Note that in Fig. 11, vertical directions, left-and-right directions, and front-and-rear directions of the robot coincide with vertical directions, left-and-right directions, and front-and-rear directions of the drawing, and that in Fig. 12, vertical directions and left-and-right directions of the robot coincide with vertical directions and left-and-right directions of the drawing.

Similarly to the workpiece transferring device 10 according to Embodiment 1, the workpiece transferring device 10 according to Embodiment 5 is configured with the robot 11 as illustrated in Figs. 11 and 12, and is configured such that a first arm 13A and a second arm 13B hold the workpieces 40 on the first placement surface (upper surface) 43a of the first conveyor belt 43 and transfer them. The robot 11 is configured such that the controller 14 is taught necessary matters by an operator through an appropriate means and thus the controller 14 causes the robot 11 to perform an automatic operation.

First, with reference to Fig. 11, the following describes structures of, for example, individual devices disposed in a worksite in which the workpiece transferring device 10 (the robot 11) according to Embodiment 1 is operated. Note that Fig. 11 illustrates a state in which two robots 11 each hold the workpieces 40 on the first placement surface (upper surface) 43a of the first conveyor belt 43 and transfer them.

As illustrated in Fig. 11, the first workbench 42, the first conveyor belt 43, and the camera 45 are disposed in the worksite in which the workpiece transferring device 10 according to Embodiment 1 is operated. The first workbench 42 a table on which the trays 41 are to be placed.

The first conveyor belt 43 operates intermittently. Specifically, the first conveyor belt 43 is configured to receive, on the upper surface (conveying surface) thereof, the plurality of workpieces 40 obtained after cutting performed by, for example, the slicer 44 with spacing between batches of the workpieces 40 and to transfer them to the front of the robot 11. The camera 45 is configured to capture images of the workpieces 40 being transferred by the first conveyor belt 43 and to output the captured images to the controller 14.

With reference to Figs. 11 and 12, the following describes a specific structure of the robot 11.

As illustrated in Fig. 12, the robot 11 includes the carriage 12. Wheels 12a are provided to a lower surface of the carriage 12, and the robot 11 is configured to be movable owing to the wheels 12a.

The base shaft 16 is fixed to an upper surface of the carriage 12. The first arm 13A and the second arm 13B are provided to the base shaft 16 to be revolvable about the rotation axis L1 passing through the axial center of the base shaft 16. Specifically, the first arm 13A and the second arm 13B are disposed with a height difference therebetween. The controller 14 is accommodated inside the carriage 12. Note that the first arm 13A and the second arm 13B are configured to be capable of moving independently of each other and moving in conjunction with each other.

The first arm 13A includes the arm part 15, the wrist part 17, a first hand part 19A, and a first attaching part 20A. In Embodiment 1, the arm part 15 includes the first link 15a and the second link 15b having substantially rectangular parallelepiped shapes. The rotary joint J1 is provided to a proximal end portion of the first link 15a, and the rotary joint J2 is provided to a tip end portion of the first link 15a. The linear-motion joint J3 is provided to a tip end portion of the second link 15b.

The proximal end portion of the first link 15a is coupled to the base shaft 16 through the rotary joint J1, and the first link 15a is revolvable about the rotation axis L1 through the rotary joint J1. A proximal end portion of the second link 15b is coupled to the tip end portion of the first link 15a through the rotary joint J2, and the second link 15b is revolvable about the rotation axis L2 through the rotary joint J2.

Through the linear-motion joint J3, the wrist part 17 is coupled to the tip end portion of the second link 15b so as to be ascendable and descendible with respect to the second link 15b. The rotary joint J4 is provided to the lower end portion of the wrist part 17, and the first attaching part 20A is provided to a lower end portion of the rotary joint J4.

The first attaching part 20A removably attaches the first hand part 19A. Specifically, the first attaching part 20A includes, for example, a pair of rod-like members, and the distance between the members is adjustable. The first hand part 19A is sandwiched by the pair of rod-like members, and then the first hand part 19A is attached to the wrist part 17. Thus, the first hand part 19A is revolvable about the rotation axis L3 through the rotary joint J4. Note that tip end portions of the rod-like members may be bent.

The first hand part 19A includes a first base 31A, a first holding part 32A, and a first fixing part 37A. The first holding part 32A is connected (fixed) to the first base 31A via the first fixing part 37A. The first base 31A is in contact with the first attaching part 20A and has a plate-like shape.

The first fixing part 37A is fixed to a side surface of the first base 31A and has an L-shape when viewed in horizontal directions. The first holding part 32A is fixed to a lower surface of the first fixing part 37A.

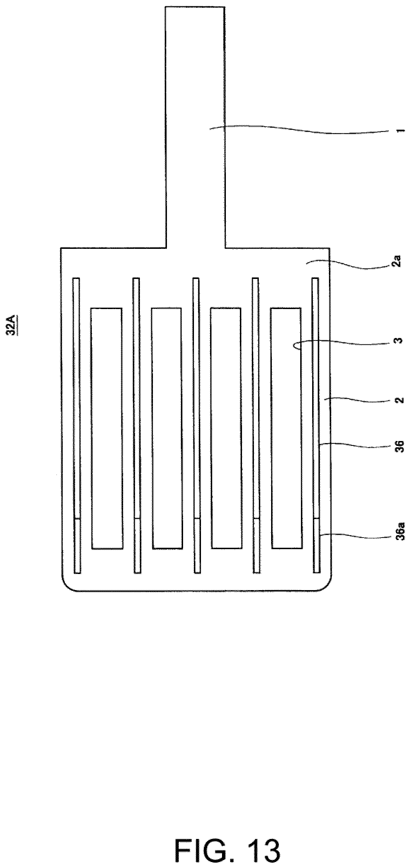

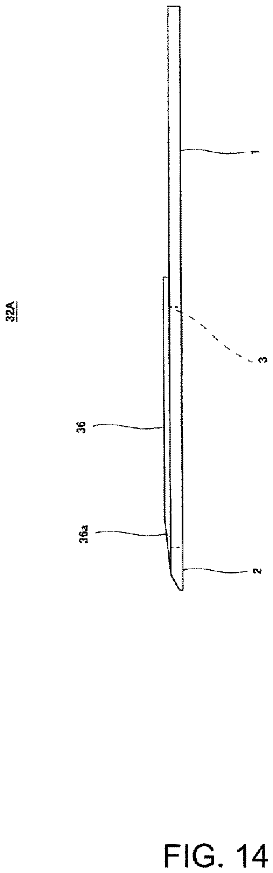

With reference to Figs. 13 and 14, the following describes the first holding part 32A of the first arm 13A in detail.

Fig. 13 is a top view illustrating a schematic structure of the first holding part of the first arm of the robot illustrated in Fig. 12. Fig. 14 is a side view of the first holding part illustrated in Fig. 13.

As illustrated in Figs. 13 and 14, the first holding part 32A of the first arm 13A has a spatula-like shape and includes a handle part 1 having a substantially strip-like shape and a main body part 2 having a substantially rectangular shape. A proximal end portion of the main body part 2 is connected to a proximal end portion of the handle part 1. A tip end portion closer to a tip of the main body part 2 has a smaller thickness.

The protruded strips 36 extend side by side on one main surface (upper surface 2a) of the main body part 2 and extend from the tip end portion toward the proximal end portion of the main body part 2. A tip end portion 36a closer to a tip of each of the protruded strips 36 has a smaller height.

The upper surface of the main body part 2 has through-holes 3, each of which is located between two adjacent protruded strips 36 and extends in the direction in which the protruded strips 36 extend. It is not always required that the upper surface has the through-holes 3. The through-holes 3 may be in a grid pattern so that the main surface of the main body part 2 is mesh-like.

As illustrated in Figs. 11 and 12, the second arm 13B includes the arm part 15, the wrist part 17, a second hand part 18B, and a second attaching part 20B. The second attaching part 20B removably attaches the second hand part 18B. The second arm 13B has a structure similar to that of the first arm 13A except for the second hand part 18B, and thus detailed descriptions of the arm part 15, the wrist part 17, and the second attaching part 20B will be omitted.

The second hand part 18B includes a second base 21B and a second holding part 22B. The second base 21B is in contact with the second attaching part 20B and has a plate-like shape. The second holding part 22B is fixed to a lower surface of the second base 21B and has an inverted L-shape when viewed in horizontal directions. The second holding part 22B has a plate-like shape and may be fixed to a side surface of the second base 21B. In other words, the second holding part 22B needs to be formed such that the direction of the normal to the main surface of the second holding part 22B corresponds to the horizontal directions.

Although the second holding part 22B has a plate-like shape in Embodiment 5, the shape is not limited thereto. The second holding part 22B may have, for example, a rod-like shape or a columnar shape. The second holding part 22B may have a fork-like shape (comb-like shape) as the second fork in Embodiment 1 does, or may be mesh-like.

### [Operations of Workpiece Transferring Device and Functions and Effects of the Same]

With reference to Figs. 11 to 17, the following describes the operations of the workpiece transferring device 10 according to Embodiment 5 and the functions and effects of the same. The processor 14a included in the controller 14 reads the programs stored in the memory 14b, so that the following operations are performed.

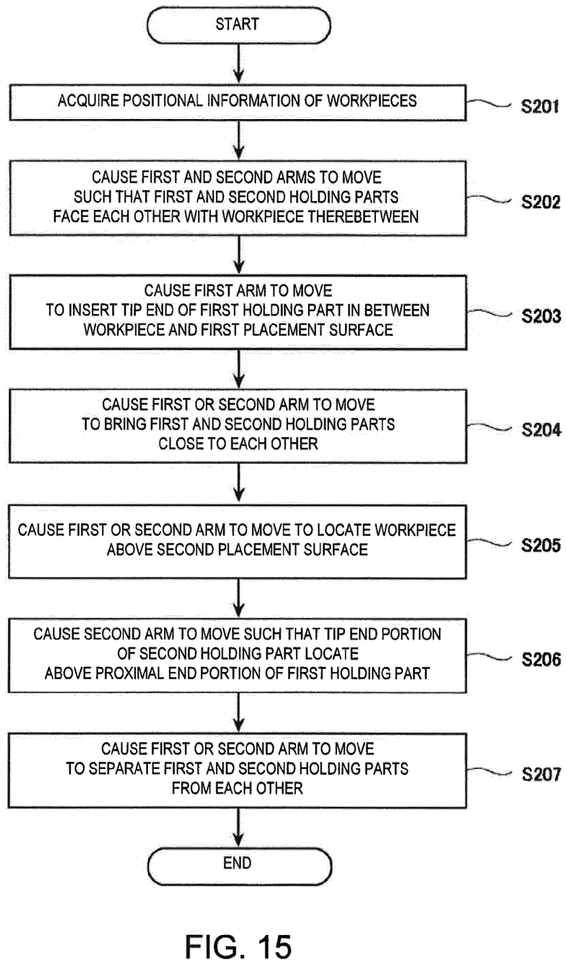

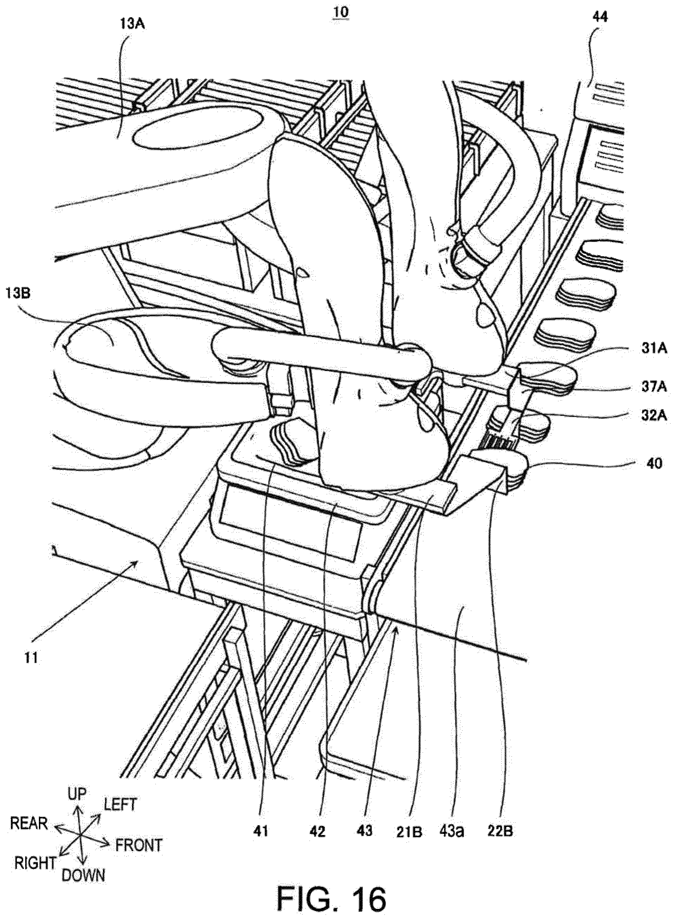

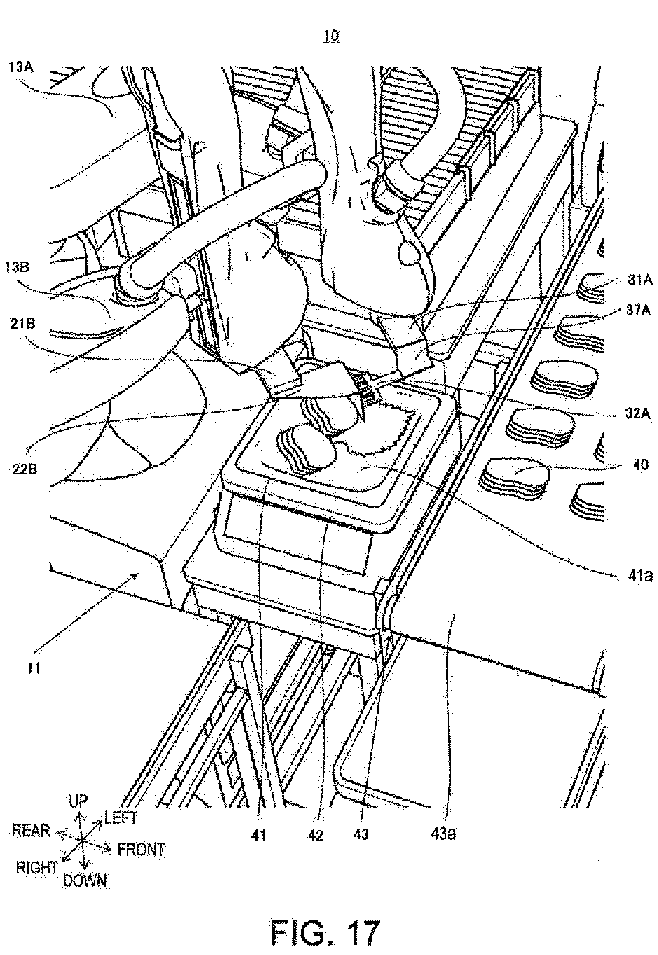

Fig. 15 is a flowchart of an example of operations performed by the workpiece transferring device according to Embodiment 5. Figs. 16 and 17 are schematic views illustrating an example of operations performed by the workpiece transferring device according to Embodiment 5. Fig. 16 illustrates movements in the state in which the workpieces placed on the first placement surface are held by the first holding part and the second holding part, and Fig. 17 illustrates the movements in the state in which the workpieces held by the first holding part is put onto the second placement surface.

As illustrated in Fig. 15, the controller 14 acquires information on the images captured by the camera 45 (see Fig. 11), and acquires positional information of the workpieces 40 on the first placement surface 43a of the first conveyor belt 43 from the acquired image information (Step S201).

Then, based on the positional information of the workpieces 40 which has been acquired in Step S201, the controller 14 causes the first arm 13A and the second arm 13B to move such that the first holding part 32A and the second holding part 22B face each other with the workpieces 40 therebetween (Step S202). Specifically, the controller 14 causes the first arm 13A to move such that the first holding part 32A is located upstream of the workpieces 40 in the direction in which the first conveyor belt 43 runs. The controller 14 also causes the second arm 13B to move so as to position the second holding part 22B downstream of the workpieces 40 in the direction in which the first conveyor belt 43 runs.

The controller 14 may also cause the first arm 13A and the second arm 13B to move such that the direction in which the protruded strip 36 of the first holding part 32A extends coincides with the direction of the normal to the main surface of the second holding part 22B.

Although the first holding part 32A and the second holding part 22B are arranged in the direction in which the first conveyor belt 43 runs in Embodiment 5, the arrangement of these holding parts is not limited thereto. It is only required that the first holding part 32A and the second holding part 22B face each other with the workpieces 40 therebetween. For example, the first holding part 32A and the second holding part 22B may be arranged in the directions perpendicular to the direction in which the first conveyor belt 43 runs (the front-and-rear directions of the robot 11).

Next, the controller 14 causes the first arm 13A to move so as to insert the tip end portion of the main body part 2 of the first holding part 32A in between the workpieces 40 and the first placement surface 43a (Step S203, see Fig. 16). Subsequently, the controller 14 causes the first arm 13A or the second arm 13B to move so as to bring the first holding part 32A and the second holding part 22B close to each other (Step S204, see Fig. 16).

Thus, the main body part 2 of the first holding part 32A passes between the workpieces 40 and the first placement surface 43a in the direction in which the first conveyor belt 43 runs, so that the workpieces 40 are put onto the upper surface 2a of the main body part 2. In Embodiment 5, the upper surface 2a of the main body part 2 is provided with the protruded strips 36 formed thereon. Thus, when the main body part 2 passes between the workpieces 40 and the first placement surface 43a, the area of upper surface 2a of the main body part 2 in contact with the workpieces 40 is reduced, and the main body part 2 is subjected to a smaller frictional resistance accordingly. The workpiece transferring device puts the workpieces 40 onto the first holding part 32A more smoothly than the workpiece transferring device 10 in Embodiment 1.

When the workpieces 40 are nearly shifted in the direction in which the first conveyor belt 43 runs according to the movement of the first holding part 32A, the workpieces 40 abut against the second holding part 22B, thus being prevented from shifting. Consequently, the workpieces 40 in a flat state are held by the first holding part 32A.

Then, the controller 14 causes the first arm 13A or the second arm 13B to move such that the workpieces 40 are located above the second placement surface 41a of the tray 41 (Step S205). Subsequently, the controller 14 causes the second arm 13B to move such that a tip end portion of the main surface of the second holding part 22B is located above the proximal end portion of the main body part 2 of the first holding part 32A (Step S206).

The controller 14 may also cause the second arm 13B to move such that the direction in which the protruded strips 36 formed on the main body part 2 of the first holding part 32A extend coincides with the direction of the normal to the main surface of the second holding part 22B. In other words, the controller 14 may cause the first arm 13A or the second arm 13B to move such that the main surface of the second holding part 22B viewed in horizontal directions faces the workpieces 40.

Then, the controller 14 causes the first arm 13A or the second arm 13B to move so as to separate the first holding part 32A and the second holding part 22B from each other in directions in which the protruded strips 36 extend (Step S207, see Fig. 17), and the controller 14 ends this program.

When the first holding part 32A is separated from the second holding part 22B, the workpieces 40 on the upper surface 2a of the main body part 2 are nearly shifted according to the movement of the first holding part 32A, the workpieces 40 abut against the second holding part 22B, thus being prevented from shifting and letting the first holding part 32A move solely. Consequently, the workpieces 40 slip down the upper surface 2a and fall to be placed on the second placement surface 41a of the tray 41.

As described above, the upper surface 2a of the main body part 2 is provided with the protruded strips 36 formed thereon in Embodiment 5. Thus, when the first holding part 32A is moved, the area of the upper surface 2a of the main body part 2 in contact with the workpieces 40 is reduced, and the first holding part 32A is subjected to a smaller frictional resistance accordingly. The first holding part 32A is shifted more smoothly and the workpieces 40 in a flat state are put onto the second placement surface 41a more easily, compared to in the workpiece transferring device 10 according to Embodiment 1.

Note that the controller 14 may cause the first arm 13A and the second arm 13B to return to preset positions (initial positions) before ending this program. Once all of the workpieces 40 on the first placement surface 43a of the first conveyor belt 43 are transferred to the second placement surfaces 41a of the trays 41 through repetitive executions of this program, the controller 14 may output information (e.g., image, sound, light) indicating that the transfer has been completed.

With the workpiece transferring device 10 having the above-described structure according to Embodiment 5, the workpieces 40 prone to deformation, such as pieces of soft and sticky meat, are appropriately transferred to the second placement surface 41a without losing their shapes.

In the workpiece transferring device 10 according to Embodiment 4, the upper surface 2a of the main body part 2 of the first holding part 32A is provided with the protruded strips 36. Thus, when the workpieces 40 are put onto the upper surface 2a of the main body part 2, the area of the main body part 2 in contact with the workpieces 40 is reduced, and the main body part 2 is subjected to a smaller frictional resistance accordingly. This workpiece transferring device puts the workpieces 40 onto the main body part 2 more smoothly than the workpiece transferring device 10 in Embodiment 1. When the workpieces 40 on the main body part 2 are put onto the second placement surface 41a, the workpieces 40 are more easily kept in a flat state.

Obviously, the workpiece transferring device 10 according to Embodiment 5 may include the suction part 25 as the workpiece transferring device 10 according to Embodiment 2 does, or may include, as the workpiece transferring device 10 according to Embodiment 3 does, the pair of sandwiching parts 28 and 35 which sandwich the tray 41.

Although the workpiece transferring device 10 according to Embodiment 5 includes the first arm 13A and the second arm 13B, its structure is not limited thereto. The workpiece transferring device may include only the first arm 13A. In this case, the controller 14 may cause the first arm 13A to move so as to insert the tip end portion of the main body part 2 of the first holding part 32A in between the workpieces 40 and the first placement surface 43a such that the workpieces 40 on the first placement surface 43a are held by the first holding part 32A. When the workpieces 40 on the upper surface of the main body part 2 of the first holding part 32A are put onto the second placement surface 41a of the tray 41, the controller 14 may cause the first arm 13A to move so as to incline the tip end portion of the main body part 2 of the first holding part 32A downward.

From the above description, it is apparent for a person skilled in the art that many improvements or other embodiments of the present disclosure are possible. Therefore, the above description is to be interpreted only as illustration, but is provided in order to teach a person skilled in the art the best modes that implement the present disclosure. Details of the structures and/or functions of the present disclosure may substantially be changed without departing from the spirit of the present disclosure.

### INDUSTRIAL AVAILABILITY

The present disclosure is useful for the workpiece transferring device, etc. capable of appropriately transferring workpieces from the first placement surface to the second placement surface.

### DESCRIPTION OF REFERENCE CHARACTERS

- 1:: Handle Part
- 2:: Main Body Part
- 2a:: Upper Surface
- 3:: Through-Hole
- 10:: Workpiece Transferring Device
- 11:: Robot
- 12:: Carriage
- 13:: Arm
- 13A:: First Arm
- 13B:: Second Arm
- 14:: Controller
- 14a:: Processor
- 14b:: Memory
- 14c:: Servo Controller
- 15:: Arm Part
- 15a:: First Link
- 15b:: Second Link
- 16:: Base Shaft
- 17:: Wrist Part
- 18:: Right Hand Part
- 18B:: Second Hand Part
- 19:: Left Hand Part
- 19A:: First Hand Part
- 20:: Right Attaching Part
- 20A:: First Attaching Part
- 20B:: Second Attaching Part
- 21:: Right Base
- 21B:: Second Base
- 22:: Second Fork
- 22B:: Second Holding Part
- 23:: Second Handle Part
- 24:: Second Branch Part
- 25:: Suction Part
- 26:: Piping
- 27:: Vacuum Generating Device
- 28:: Second Sandwiching Part
- 28a:: Second Side Surface Part
- 28b:: Second Bottom Surface Part
- 30:: Left Attaching Part
- 31:: Left Base
- 31A:: First Base
- 32:: First Fork
- 32A:: First Holding Part
- 33:: First Handle Part
- 34:: First Branch Part
- 34a:: Branch Point
- 34b:: Tip
- 35:: First Sandwiching Part
- 35a:: First Side Surface Part
- 35b:: First Bottom Surface Part
- 36:: Protruded Strip
- 36a:: Tip End Portion
- 37A:: First Fixing Part
- 40:: Workpiece
- 41:: Tray
- 41a:: Second Placement Surface
- 42:: First Workbench
- 43:: First Conveyor Belt
- 43a:: First Placement Surface
- 44:: Slicer
- 45:: Camera
- 46:: Second Workbench
- 47:: Grass Garnish Sheet
- 48:: Second Conveyor Belt
- J1:: Rotary Joint
- J2:: Rotary Joint
- J3:: Linear-Motion Joint
- J4:: Rotary Joint
- L1:: Rotation Axis
- L2:: Rotation Axis
- L3:: Rotation Axis

## Claims

1. A workpiece transferring device configured to transfer a workpiece from a first placement surface to a second placement surface, comprising:
a first arm including, at a tip thereof, a first fork having a first branch part extending sideward, and configured to move the first fork; and
a second arm including, at a tip thereof, a second fork having a second branch part extending downward, and configured to move the second fork, wherein
when the first branch part passes in between the workpiece and the first placement surface, the second branch part is located ahead of the workpiece in a moving direction of the first branch part, and
when the first branch part passes in between the workpiece and the second placement surface, the second branch part is located ahead of the workpiece in the moving direction of the first branch part.

2. The workpiece transferring device according to claim 1, wherein
the first fork has a plurality of the first branch parts, and
the second fork has a plurality of the second branch parts.

3. The workpiece transferring device according to claim 1 or 2, wherein
the first fork has a plurality of the first branch parts,
the second fork has a plurality of the second branch parts, and
when the first fork is located between the workpiece and the first placement surface, a tip of each of the first branch parts is inserted into a gap between the adjacent second branch parts.

4. The workpiece transferring device according to any one of claims 1 to 3, wherein
the first fork has a plurality of the first branch parts,
the second fork has a plurality of the second branch parts, and
when the first fork is located between the workpiece and the second placement surface, a tip of at least one of the plurality of second branch parts is inserted into a gap between the adjacent first branch parts in a clearance between the workpiece and the plurality of first branch parts.

5. The workpiece transferring device according to any one of claims 1 to 4, wherein at least one of the first arm and the second arm further includes a suction part configured to cause the second placement surface to adhere thereto due to suction.

6. The workpiece transferring device according to any one of claims 1 to 5, further comprising a pair of sandwiching parts configured to sandwich a tray, the second placement surface being an upper surface of the tray, wherein
one of the pair of sandwiching parts is provided to the first arm, and
the other sandwiching part is provided to the second arm.

7. The workpiece transferring device according to any one of claims 1 to 6, comprising a robot including the first arm and the second arm.

8. The workpiece transferring device according to any one of claims 1 to 7, wherein the first branch part is provided with a protruded strip extending on an upper surface thereof in a direction in which the first branch part extends.

9. The workpiece transferring device according to claim 8, wherein a tip end portion the protruded strip closer to a tip thereof has a smaller height.

10. The workpiece transferring device according to any one of claims 1 to 9, further comprising a controller configured to:
cause the first arm and the second arm to move such that the first fork and the second fork face each other with the workpiece on the first placement surface therebetween, and
subsequently cause the first arm to move so as to insert a tip of the first branch part of the first fork in between the workpiece and the first placement surface and cause one of the first arm and the second arm to move so as to bring the first fork and the second fork close to each other.

11. The workpiece transferring device according to claim 10, wherein
when the workpiece on an upper surface of the first branch part of the first fork is put onto the second placement surface, the controller causes the second arm to move such that a tip end portion of the second branch part of the second fork is located above a proximal end portion of the first branch part, and
the controller subsequently causes one of the first arm and the second arm to move so as to separate the first fork and the second fork from each other in directions in which the first branch part extends.

12. A workpiece transferring device comprising:
a first arm including a first holding part having a plate-like shape and provided with a plurality of protruded strips extending side by side on a first main surface of the first holding part; and
a controller,
wherein the controller causes the first arm to move so as to insert the first holding part in between a workpiece and a first placement surface.

13. The workpiece transferring device according to claim 12, further comprising a second arm including a second holding part, wherein
the controller causes the first am and the second arm to move such that the first holding part and the second holding part face each other with the workpiece on the first placement surface therebetween, and
the controller subsequently causes one of the first arm and the second arm to move so as to insert the first holding part in between the workpiece and the first placement surface and bring a main surface of the second holding part into contact with the workpiece.

14. The workpiece transferring device according to claim 12 or 13, wherein a tip end portion of each of the plurality of protruded strips closer to a tip thereof has a smaller height.

15. The workpiece transferring device according to any one of claims 12 to 14, wherein
the controller causes the second arm to move such that the second holding part faces the workpiece on the first main surface of the first holding part and a tip end portion of the second holding part is located above a proximal end portion of the first main surface, and
the controller subsequently causes one of the first arm and the second arm to move so as to separate the first holding part and the second holding part from each other in directions in which the plurality of protruded strips extend.

16. A method for operating a workpiece transferring device, the workpiece transferring device including a first arm including a first holding part having a plate-like shape and provided with a plurality of protruded strips extending side by side on a first main surface of the first holding part, and the method comprising:
causing the first arm to move so as to insert the first holding part in between a workpiece and a first placement surface.

17. The method for operating the workpiece transferring device according to claim 16, the workpiece transferring device further including a second arm including a second holding part, the method further comprising:
(A) causing the first arm and the second arm to move such that the first holding part and the second holding part face each other with the workpiece on the first placement surface therebetween, and
(B) causing, subsequent to (A), one of the first arm and the second arm to move so as to insert the first holding part in between the workpiece and the first placement surface and bring the second holding part into contact with the workpiece.

18. The method for operating the workpiece transferring device according to claim 17, wherein (A) includes (A1) causing the first arm to move such that the first main surface of the first holding part faces upward.

19. The method for operating the workpiece transferring device according to claim 17 or 18, wherein (A) includes (A2) causing the first arm and the second arm to move such that a tip of the first main surface of the first holding part and the second holding part face each other with the workpiece therebetween.

20. The method for operating the workpiece transferring device according to any one of claims 17 to 19, further comprising (C) causing, subsequent to (B), one of the first arm and the second arm to put the workpiece on the first main surface of the first holding part onto a second placement surface.

21. The method for operating the workpiece transferring device according to claim 20, wherein (C) includes:
(CI) causing the second arm to move such that the second holding part faces the workpiece on the first main surface of the first placement surface and a tip end portion of the second holding part is located above a proximal end portion of the first main surface, and
(C2) causing, subsequent to (C1), one of the first arm and the second arm to move so as to separate the first holding part and the second holding part from each other in directions in which the protruded strips extend.
